(19) Europäisches Patentamt / European Patent Office / Office européen des brevets

(11) **EP 3 896 928 B1**

(12) **EUROPEAN PATENT SPECIFICATION**

(45) Date of publication and mention of the grant of the patent:
**29.11.2023 Bulletin 2023/48**

(21) Application number: **19895317.6**

(22) Date of filing: **12.12.2019**

(51) International Patent Classification (IPC):
*H04W 16/10* (2009.01)    *H04W 16/22* (2009.01)

(52) Cooperative Patent Classification (CPC):
**H04W 16/22; H04W 16/10**

(86) International application number:
**PCT/CN2019/124905**

(87) International publication number:
**WO 2020/119769 (18.06.2020 Gazette 2020/25)**

(54) **DYNAMIC BANDWIDTH ALLOCATION METHOD, DEVICE, AND APPARATUS, AND STORAGE MEDIUM**

VERFAHREN, VORRICHTUNG UND GERÄT ZUR DYNAMISCHEN BANDBREITENZUORDNUNG UND SPEICHERMEDIUM

PROCÉDÉ, DISPOSITIF ET APPAREIL D'ATTRIBUTION DYNAMIQUE DE BANDE PASSANTE, ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2018 CN 201811518707**

(43) Date of publication of application:
**20.10.2021 Bulletin 2021/42**

(73) Proprietor: **Sanechips Technology Co., Ltd.**
**Shenzhen, Guangdong 518055 (CN)**

(72) Inventor: **CHEN, Sunjie**
**Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(56) References cited:
**US-A1- 2008 205 443    US-A1- 2009 103 545**

• **DENIS A KHOTIMSKY ZTE CHINA: "Draft 2013 Revision of G.984.3;TD", ITU-T DRAFT ; STUDY PERIOD 2009-2012, INTERNATIONAL TELECOMMUNICATION UNION, GENEVA ; CH, vol. Q2, 31 October 2012 (2012-10-31), pages 1-163, XP017576616, [retrieved on 2012-10-31]**

## Description

The present application claims the priority from Chinese Patent Application No. 201811518707.6, filed on December 12, 2018 to National Intellectual Property Administration, PRC.

## TECHNICAL FIELD

The application relates to the technical field of passive optical networks, and exemplarily relates to a method and a device for realizing dynamic bandwidth allocation (DBA), and a storage medium.

## BACKGROUND

In a passive optical network (PON) system, compared to a static bandwidth allocation (SBA), a DBA can enable an optical line terminal (OLT) to adaptively adjust a size of a bandwidth allocated to an optical network unit (ONU) according to a buffer status or traffic monitoring of the ONU, which greatly improves bandwidth utilization.

In a basic network, a basic operator (i.e., an OLT side) allocates a fixed bandwidth, a guaranteed bandwidth and a best-effort bandwidth to all transmission containers (T-CONTs) under a PON port one by one according to certain rules (e.g., bandwidth types and priorities) through a traditional DBA. With continuous changes in network access requirements, more and more virtual operators have accessed to the basic network. Bandwidth resources are allocated to the virtual operators by the basic operator, and then allocated to users by the virtual operators.

Therefore, how to ensure fairness and efficiency of bandwidth allocation among the virtual operators is a problem that the basic operator needs to face.

U.S. Patent Application US2008205443A1 discloses a bandwidth-allocating method of the present invention for PON, a bandwidth is allocated from an optical line terminal to each optical network unit, the bandwidth-allocating method includes a step of transmitting a service-quality request message including the communication flow IDs and the service quality parameters from each optical network unit to the optical line terminal, and a step of the optical line terminal's updating the bandwidth contract table based on the service quality parameters, and performing the bandwidth allocation to a communication flow specified by the corresponding communication flow ID based on the bandwidth contract table.

U.S. Patent Application US2009103545A1 discloses a method for manage Quality of Service (QoS) in a network that uses time division access that refers to TR 156/ TR 101, and discloses type of bandwidths being one of fixed, assured, non-assured and best effort bandwidth.

A temporary document "Draft 2013 Revision of G.984.3; TD" contains the draft Revision of ITU-T Recommendation G.984.3, discloses different T-Cont types, each of with different QoS services.

## SUMMARY

The invention is carried out according to the appended independent claims. Optional features of the invention are carried out according to the dependent claims. This application provides a method, a device, and a storage medium for realizing DBA which can satisfy requirements of virtual operators accessing to a basic network, and ensure the fairness and efficiency of bandwidth allocation among a plurality of operators.

Provided by the embodiments of the present application is a method for realizing DBA, including: allocating T-CONTs supported by an optical line terminal, OLT, to N user groups, where each of M virtual operators corresponds to a user group, so that the M virtual operators correspond to M of the N user groups, and M is less than or equal to N; setting a bandwidth attribute of a user group corresponding to a virtual operator among the M virtual operators, according to a bandwidth requirement of the virtual operator; and allocating a bandwidth resource corresponding to the bandwidth attribute to the user group corresponding to the virtual operator through a T-CONT allocated to the user group corresponding to the virtual operator, the method further comprising: determining the number N of the user groups according to the number M of the virtual operators, wherein N is a smallest positive integer greater than or equal to M among $2^n$, and n is a positive integer.

Provided by the embodiments of the present application is a device for realizing DBA, including: a container allocation module, configured to allocate T-CONTs supported by an optical line terminal, OLT, to N user groups, where each of M virtual operators corresponds to a user group, so that the M virtual operators correspond to M of the N user groups, and M is less than or equal to N; and a bandwidth allocation module, configured to set a bandwidth attribute of a user group corresponding to a virtual operator among the M virtual operators, according to a bandwidth requirement of the virtual operator; and allocate a bandwidth resource corresponding to the bandwidth attribute to the user group corresponding to the virtual operator through a T-CONT allocated to the user group corresponding to the virtual operator, wherein the container allocation module (10) is further configured to determine the number N of the user groups according to the number M of the virtual operators, wherein N is a smallest positive integer greater than or equal to M among $2^n$,

and n is a positive integer.

Provided by the embodiments of the present application is an equipment for realizing DBA, including: a memory, a processor, and a program for realizing DBA stored on the memory and executable by the processor. When the program for realizing DBA is executed by the processor, the above method for realizing DBA is implemented.

Provided by the embodiments of the present application is a computer-readable storage medium storing a program for realizing DBA. When the program for realizing DBA is executed by a processor, the above method for realizing DBA is implemented.

**BRIEF DESCRIPTION OF THE DRAWINGS**

Fig. 1 is a flowchart of a method for realizing DBA.
Fig. 2 is a schematic diagram of a device for realizing DBA.
Fig. 3 is a schematic diagram of a basic network for dynamically allocating bandwidths.

**DETAILED DESCRIPTION**

Hereinafter, embodiments of the present application will be described with reference to the drawings.

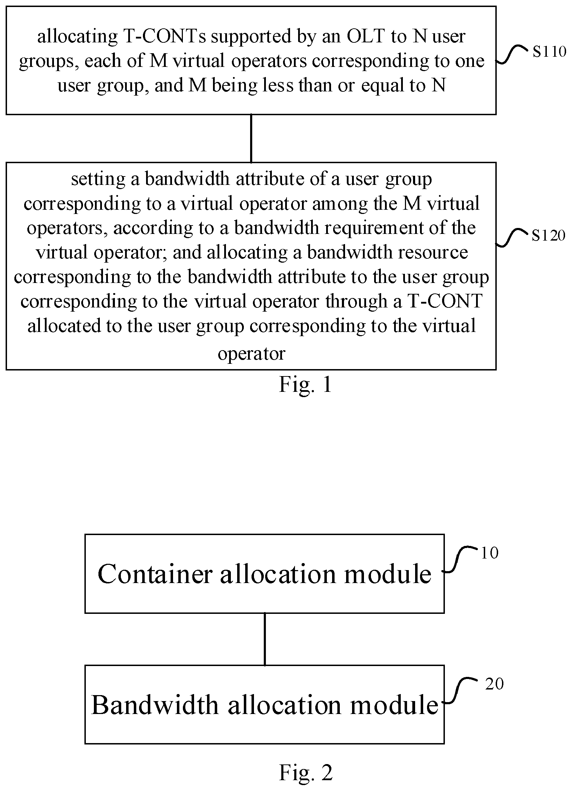

As shown in Fig. 1, the invention provides a method for realizing DBA, including the following steps.

In step S110, T-CONTs supported by an OLT are allocated to N user groups, each of M virtual operators corresponds to one user group, and M is less than or equal to N.

In step S120, a bandwidth attribute of a user group corresponding to a virtual operator among the M virtual operators is set according to a bandwidth requirement of the virtual operator, and a bandwidth resource corresponding to the bandwidth attribute is allocated to the user group corresponding to the virtual operator through a T-CONT allocated to the user group corresponding to the virtual operator.

In the above-mentioned implementable manner, a basic operator (i.e., an OLT side) allocates bandwidth resources to a plurality of virtual operators by dividing user groups, thereby ensuring fairness and efficiency of uplink transmission processes among the plurality of virtual operators.

In an implementable manner, allocating the T-CONTs supported by the OLT to the N user groups includes: for any one user group, allocating an ONU management and control interface (OMCI) T-CONT and a service T-CONT supported by the OLT to the user group, according to a number of users supported by a virtual operator corresponding to the user group.

In an implementable manner, allocating the T-CONTs supported by the OLT to the N user groups includes: dividing OMCI T-CONT identifiers (IDs) supported by the OLT into N sections, and dividing service T-CONT IDs supported by the OLT into N sections; and allocating an OMCI T-CONT ID in an i-th section and a service T-CONTID in an i-th section to an i-th user group; where i is greater than or equal to 1, and less than or equal to N.

In an implementable manner, allocating the T-CONTs supported by the OLT to the N user groups includes: allocating $x_i$ OMCI T-CONT IDs to the i-th user group; where the $x_i$ OMCI T-CONT IDs are discretionarily selected from all OMCI T-CONT IDs supported by the OLT; and a sum of numbers of OMCI T-CONT IDs allocated to the N user groups does not exceed a total number of the OMCI T-CONT IDs supported by the OLT, and OMCI T-CONT IDs allocated to different user groups are different; and allocating $y_i$ service T-CONT IDs to the i-th user group; where the $y_i$ service T-CONT IDs are selected from all service T-CONT IDs supported by the OLT; and a sum of numbers of service T-CONT IDs allocated to the N user groups does not exceed a total number of the service T-CONT IDs supported by the OLT, and service T-CONT IDs allocated to different user groups are different; where i is greater than or equal to 1, and less than or equal to N.

In an implementable manner, allocating the T-CONTs supported by the OLT to the N user groups includes: for the i-th user group, selecting an OMCI T-CONT ID from the OMCI T-CONT IDs in the i-th section allocated to the i-th user group, as a T-CONT ID of the i-th user group; or for the i-th user group, selecting a service T-CONT ID from the service T-CONT IDs in the i-th section allocated to the i-th user group, as the T-CONT ID of the i-th user group; where i is greater than or equal to 1, and less than or equal to N.

In the claimed invention, the method includes: determining the number N of the user groups according to the number M of the virtual operators. N is a smallest positive integer greater than or equal to M among $2^n$, and n is a positive integer.

In other implementable manners not being part of the claimed invention, N may also be a power of another value, and the power is chosen to facilitate hardware implementation.

In an implementable manner, the bandwidth attribute includes at least one of a fixed bandwidth, a guaranteed bandwidth, or a best-effort bandwidth.

In an implementable manner, allocating the bandwidth resource corresponding to the bandwidth attribute to the user group corresponding to the virtual operator includes: for any one user group, monitoring a sum of ONU buffers of all online T-CONTs of the user group, or monitoring a ratio of a sum of effective payloads to a sum of total payloads in uplink bursts of all online T-CONTs of the user group; and using a DBA bandwidth prediction model to predict a total bandwidth of the user group according to the monitored data, and using the predicted bandwidth value as an upper limit of a total bandwidth allocated to all online users of the user group and corresponding to a bandwidth attribute of the user group in a next round of bandwidth allocation.

Compared with related technologies, according to the method for realizing DBA provided by the claimed invention, the T-CONTs supported by the OLT are allocated to the N user groups, each of the M virtual operators corresponds to one user group, and M is less than or equal to N; and the bandwidth attribute of the user group corresponding to the one virtual operator among the M virtual operators is set according to the bandwidth requirement of the virtual operator, and the bandwidth resource corresponding to the bandwidth attribute is allocated to the user group corresponding to the virtual operator through the T-CONTs allocated to the user group corresponding to the virtual operator. The technical solutions of the embodiments of the present application satisfies the requirements of the virtual operators accessing to a basic network, and ensure the fairness and efficiency of bandwidth allocation among the virtual operators.

As shown in Fig. 2, the embodiments of the claimed invention provide a device for realizing DBA, including: a container allocation module 10, configured to allocate T-CONTs supported by an OLT to N user groups, where each of M virtual operators corresponds to one user group, and M is less than or equal to N; and a bandwidth allocation module 20, configured to set a bandwidth attribute of a user group corresponding to a virtual operator among the M virtual operators, according to a bandwidth requirement of the virtual operator, and allocate a bandwidth resource corresponding to the bandwidth attribute to the user group corresponding to the virtual operator through a the T-CONT allocated to the user group corresponding to the virtual operator.

In the above-mentioned implementable manner, a basic operator (i.e., an OLT side) allocates bandwidth resources to a plurality of virtual operators by dividing user groups, thereby ensuring fairness and efficiency of uplink transmission processes among the plurality of virtual operators.

In an implementable manner, the container allocation module is configured to allocate the T-CONTs supported by the OLT to the N user groups in the following manner: for any one user group, allocating an OMCI T-CONT and a service T-CONT supported by the OLT to the user group, according to a number of users supported by a virtual operator corresponding to the user group.

In an implementable manner, the container allocation module is configured to allocate the T-CONTs supported by the OLT to the N user groups in the following manner: dividing OMCI T-CONTIDs supported by the OLT into N sections, and dividing service T-CONT IDs supported by the OLT into N sections; and allocating an OMCI T-CONT ID in an i-th section and a service T-CONT ID in an i-th section to an i-th user group; where i is greater than or equal to 1, and less than or equal to N.

In an implementable manner, the container allocation module is configured to allocate the T-CONTs supported by the OLT to the N user groups in the following manner: allocating $x_i$ OMCI T-CONT IDs to the i-th user group; where the $x_i$ OMCI T-CONT IDs are discretionarily selected from all OMCI T-CONT IDs supported by the OLT; and a sum of numbers of OMCI T-CONT IDs allocated to the N user groups does not exceed a total number of the OMCI T-CONT IDs supported by the OLT, and OMCI T-CONT IDs allocated to different user groups are different; and allocating $y_i$ service T-CONT IDs to the i-th user group; where the $y_i$ service T-CONT IDs are selected from all service T-CONTIDs supported by the OLT; and a sum of numbers of service T-CONT IDs allocated to the N user groups does not exceed a total number of the service T-CONT IDs supported by the OLT, and service T-CONTIDs allocated to different user groups are different; where i is greater than or equal to 1, and less than or equal to N.

In an implementable manner, the container allocation module is configured to allocate the T-CONTs supported by the OLT to the N user groups in the following manner: for the i-th user group, selecting an OMCI T-CONT ID from the OMCI T-CONT IDs in the i-th section allocated to the i-th user group, as a T-CONT ID of the i-th user group; or for the i-th user group, selecting a service T-CONT ID from the service T-CONT IDs in the i-th section allocated to the i-th user group, as a T-CONT ID of the i-th user group; where i is greater than or equal to 1, and less than or equal to N.

In the claimed invention, the container allocation module is configured to determine the number N of the user groups according to the number M of the virtual operators. N is a smallest positive integer greater than or equal to M among $2^n$, and n is a positive integer.

In other implementable manners not being part of the claimed invention, N may also be a power of another value, and the power is chosen to facilitate hardware implementation.

In an implementable manner, the bandwidth attribute includes at least one of a fixed bandwidth, a guaranteed bandwidth, or a best-effort bandwidth.

In an implementable manner, the bandwidth allocation module is configured to allocate the bandwidth resource corresponding to the bandwidth attribute to the user group corresponding to the virtual operator in the following manner: for any one user group, monitoring a sum of ONU buffers of all online T-CONTs of the user group, or monitoring a ratio

EP 3 896 928 B1

of a sum of effective payloads to a sum of total payloads in uplink bursts of all online T-CONTs of the user group; and using a DBA bandwidth prediction model to predict a total bandwidth of the user group according to the monitored data, and using the predicted bandwidth value as an upper limit of a total bandwidth allocated to all online users of the user group and corresponding to the bandwidth attribute of the user group in a next round of bandwidth allocation.

The embodiments of the present application provide an equipment for realizing DBA, including a memory, a processor, and a program for realizing DBA stored on the memory and being executable by the processor. When the program for realizing DBA is executed by the processor, the method for realizing DBA described in the embodiments is implemented.

The embodiments of the present application provide a computer-readable storage medium on which a program for realizing DBA is stored, and when the program for realizing DBA is executed by a processor, the method for realizing DBA described in the embodiments is implemented.

First Example

This example provides a solution for realizing DBA to satisfy requirements of virtual operators to access a basic network.

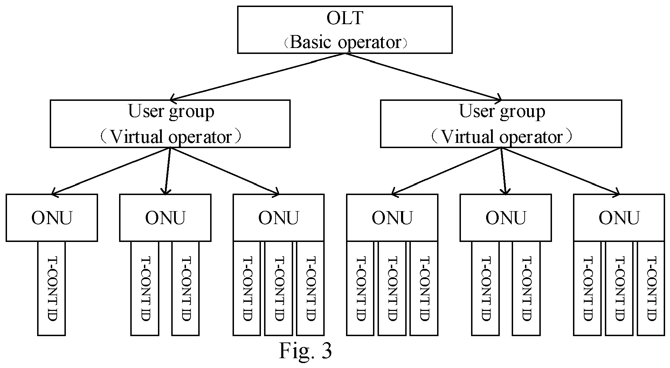

As shown in Fig. 3, a basic operator (i.e., an OLT side) allocates T-CONTs supported by the OLT to user groups respectively formed by respective virtual operators, according to certain rules and a number of the virtual operators. According to different requirements of each virtual operator, the basic operator allocates a bandwidth resource to a user group, and the bandwidth resource allocated to the user group needs to consider a bandwidth attribute (a fixed bandwidth, a guaranteed bandwidth and a best-effort bandwidth) of the user group. For the virtual operator, an upper limit of bandwidth allocation for all users in the user group is limited by the bandwidth attribute and bandwidth value of the user group. For example, a sum of best-effort bandwidths of all users in one user group cannot exceed a best-effort bandwidth of the user group.

The most important thing to achieve DBA is to determine the number N of the user groups. It is needed to consider the following factors to determine the number N of the user groups: 1) whether a requirement of the number of virtual operators being satisfied; 2) complexity of hardware implementation; and 3) a number of users supported by the virtual operators.

In order to take into account the above three factors at the same time, the number N of the user groups may be a power of 2 and greater than and nearest to the number M of the virtual operators. That is, $M \leq N$, $N = 2^n$, n is a positive integer, and the power is chosen to facilitate hardware implementation.

After the number of the user groups is determined, a T-CONT ID section of each user group can be obtained, and a T-CONT ID within the T-CONT ID section of each user group is determined as a T-CONT ID of the user group. Generally, the T-CONT ID of the user group may be determined in a service T-CONT ID section. Compared with an OMCI T-CONT ID section, the service T-CONT ID section has more available T-CONT IDs, and occupying one T-CONT ID in the T-CONT ID section has little effect on performance of the entire user group.

Take the XGigabit-Capable PON (XGPON) protocol as an example. For example, the basic network currently supports $m_1$ virtual operators, the user groups are $m_2$ groups ($m_1 < m_2$), and an entire PON port supports $e$ T-CONT IDs including $x_1$ OMCI T-CONTs and $x_2$ service T-CONTs, where $x_1 + x_2 = e$. A first T-CONT ID of each service T-CONT ID section is taken as the T-CONT ID of the user group, and the specific allocation of the T-CONT ID for each user group is shown in Table 1 below.

Table 1

| Number of user groups: $m_2$ groups | | | |
| --- | --- | --- | --- |
| Group No. | User group T-CONT ID | User group T-CONT ID section | |
| | | OMCI T-CONT ID | Service T-CONT ID |
| 0 | $b_0$ | $a_0 \sim a_{1*\frac{x_1}{m_2}-1}$ | $b_0 \sim b_{1*\frac{x_2}{m_2}-1}$ |
| 1 | $b_{1*\frac{x_2}{m_2}}$ | $a_{1*\frac{x_1}{m_2}} \sim a_{2*\frac{x_1}{m_2}-1}$ | $b_{1*\frac{x_2}{m_2}} \sim b_{2*\frac{x_2}{m_2}-1}$ |
| 2 | $b_{2*\frac{x_2}{m_2}}$ | $a_{2*\frac{x_1}{m_2}} \sim a_{3*\frac{x_1}{m_2}-1}$ | $b_{2*\frac{x_2}{m_2}} \sim b_{3*\frac{x_2}{m_2}-1}$ |

(continued)

| Number of user groups: $m_2$ groups | | | |
|---|---|---|---|
| Group No. | User group T-CONT ID | User group T-CONT ID section | |
| | | OMCI T-CONT ID | Service T-CONT ID |
| ... | ... | ... | ... |
| $m_2$-2 | $b_{(m_2-2)*\frac{x_2}{m_2}}$ | $a_{(m_2-2)*\frac{x_1}{m_2}} \sim a_{(m_2-1)*\frac{x_1}{m_2}-1}$ | $b_{(m_2-2)*\frac{x_2}{m_2}} \sim b_{(m_2-1)*\frac{x_2}{m_2}-1}$ |
| $m_2$-1 | $b_{(m_2-1)*\frac{x_2}{m_2}}$ | $a_{(m_2-1)*\frac{x_1}{m_2}} \sim a_{x_1-1}$ | $b_{(m_2-1)*\frac{x_2}{m_2}} \sim b_{x_2-1}$ |

Compared with the traditional DBA technology, user groups are added in the DBA solution of this example. For any one user group, a sum of ONU buffers of all online T-CONTs of the user group is monitored, or a ratio of a sum of effective payloads to a sum of total payloads in uplink bursts of all online T-CONTs of the user group is monitored; and a DBA bandwidth prediction model is used to predict a total bandwidth of the user group according to the monitored data, and a predicted bandwidth value is used as an upper limit of a total bandwidth allocated to all online users of the user group and corresponding to a bandwidth attribute of the user group in a next round of bandwidth allocation.

For example, in Table 1, user group No. 0 is loaded with 64 ONUs, and each ONU is allocated an OMCI T-CONT and a service T-CONT. The basic operator performs data statistics on these 128 T-CONTs according to a selected bandwidth prediction model, and uses a predicted total bandwidth of user group No. 0 (less than or equal to a maximum bandwidth initially set for this group) as an upper limit of a sum of bandwidths allocated to all online users of the user group No. 0 in the next round.

In the DBA solution provided in this example, the basic operator (i.e., the OLT side) allocates bandwidth resources to a plurality of virtual operators by dividing user groups, which is different from the related technology in which the basic operator directly pays attention to differences among bandwidth configuration of each ONU. Since the basic operator sets the upper limit of the maximum available bandwidth of the user group, fairness and efficiency of uplink transmission processes among the plurality of virtual operators are ensured.

The all or some of the steps in the methods disclosed above, and functional modules/units in the devices disclosed above may be implemented as software, firmware, hardware and the suitable combination thereof. In hardware embodiments, the division for the functional modules/units mentioned in the above description does not necessarily correspond to the division for physical components. For example, one physical component may have multiple functions, or one function or step may be performed jointly by several physical components. Some or all physical components may be implemented as software executed by a processor such as digital signal processor or microprocessor, or implemented as the hardware, or implemented as an integrated circuit such as application specific integrated circuit. Such software may be distributed over a computer-readable media which may include a computer storage medium (or a non-transient medium) and a communication medium (or a transient medium). As can be well known by those having ordinary skill in the art, the term "computer storage medium" includes the volatile, non-volatile, removable and unremovable media implemented in any method or technique for storing information (such as computer-readable instructions, data structures, program modules, or other data). The computer storage medium includes but not limited to Random Access Memory (RAM), Read-Only Memory (ROM), Electrically Erasable Programmable Read-Only Memory (EEPROM), flash or other memory technology, Compact Disc Read-Only Memory (CD-ROM), Digital Versatile Disc (DVD) or other optical disc storage, magnetic box, magnetic tape, magnetic disk storage or other magnetic storage device, or any other medium which can be used to store desired information and can be accessed by a computer. Furthermore, it is well known by those having ordinary skill in the art that the communication medium generally contains the computer-readable instructions, the data structures, the program modules, or other data in a modulated data signal such as a carrier or other transmission mechanism, and may include any information delivery medium.

## Claims

1. A method for realizing dynamic bandwidth allocation, comprising:

   allocating (S110) transmission containers supported by an optical line terminal, OLT, to N user groups, wherein each of M virtual operators corresponds to one user group, so that the M virtual operators correspond to M user groups of the N user groups, and M is less than or equal to N;

setting (S120) a bandwidth attribute of a user group corresponding to a virtual operator among the M virtual operators, according to a bandwidth requirement of the virtual operator; and

allocating a bandwidth resource corresponding to the bandwidth attribute to the user group corresponding to the virtual operator through a transmission container allocated to the user group corresponding to the virtual operator,

the method further comprising:

determining the number N of the user groups according to the number M of the virtual operators, wherein N is a smallest positive integer greater than or equal to M among $2^n$, and n is a positive integer.

2. The method according to claim 1, wherein allocating (S110) the transmission containers supported by the OLT to the N user groups, comprising:

for a user group, allocating an optical network unit management and control interface, OMCI, transmission container and a service transmission container supported by the OLT to the user group, according to a number of users supported by a virtual operator corresponding to the user group.

3. The method according to claim 1, wherein allocating (S110) the transmission containers supported by the OLT to the N user groups, comprising:

dividing OMCI transmission container IDs supported by the OLT into N sections, and dividing service transmission container IDs supported by the OLT into N sections; and

allocating an OMCI transmission container ID in an i-th section and a service transmission container ID in an i-th section to an i-th user group;

wherein i is greater than or equal to 1, and less than or equal to N.

4. The method according to claim 1, wherein allocating (S110) the transmission containers supported by the OLT to the N user groups, comprising:

allocating $x_i$ OMCI transmission container IDs to an i-th user group; wherein the $x_i$ OMCI transmission container IDs are selected from all OMCI transmission container IDs supported by the OLT, a sum of numbers of OMCI transmission container IDs allocated to the N user groups does not exceed a total number of the OMCI transmission container IDs supported by the OLT, and OMCI transmission container IDs allocated to different user groups are different; and

allocating $y_i$ service transmission container IDs to the i-th user group; wherein the $y_i$ service transmission container IDs are selected from all service transmission container IDs supported by the OLT, a sum of numbers of service transmission container IDs allocated to the N user groups does not exceed a total number of the service transmission container IDs supported by the OLT, and service transmission container IDs allocated to different user groups are different;

wherein i is greater than or equal to 1, and less than or equal to N.

5. The method according to any one of claims 1-4, wherein allocating the bandwidth resource corresponding to the bandwidth attribute to the user group corresponding to the virtual operator, comprising:

for a user group, monitoring a sum of optical network unit, ONU, buffers of all online transmission containers of the user group, or monitoring a ratio of a sum of effective payloads to a sum of total payloads in uplink bursts of all online transmission containers of the user group; and

using a dynamic-bandwidth-allocation bandwidth prediction model to predict a total bandwidth of the user group according to the monitored data, and using the predicted bandwidth value as an upper limit of a total bandwidth allocated to all online users of the user group and corresponding to a bandwidth attribute of the user group in a next round of bandwidth allocation.

6. The method according to any one of claims 1-5, wherein the bandwidth attribute comprises at least one of a fixed bandwidth, a guaranteed bandwidth, or a best-effort bandwidth.

7. A device for realizing dynamic bandwidth allocation, comprising:

a container allocation module (10) configured to allocate transmission containers supported by an optical line terminal, OLT, to N user groups, wherein each of M virtual operators corresponds to one user group, so that the M virtual operators correspond to M user groups of the N user groups, and M is less than or equal to N; and a bandwidth allocation module (20) configured to set a bandwidth attribute of a user group corresponding to a virtual operator among the M virtual operators, according to a bandwidth requirement of the virtual operator; and allocate a bandwidth resource corresponding to the bandwidth attribute to the user group corresponding to the virtual operator through a transmission container allocated to the user group corresponding to the virtual operator,

wherein the container allocation module (10) is further configured to determine the number N of the user groups according to the number M of the virtual operators, wherein N is a smallest positive integer greater than or equal to M among $2^n$, and n is a positive integer.

8. The device according to claim 7, wherein the container allocation module (10) is configured to:
for a user group, allocate an optical network unit management and control interface, OMCI, transmission container and a service transmission container supported by the OLT to the user group, according to a number of users supported by a virtual operator corresponding to the user group.

9. The device according to claim 7, wherein the container allocation module (10) is configured to:

divide OMCI transmission container IDs supported by the OLT into N sections, and divide service transmission container IDs supported by the OLT into N sections; and
allocate an OMCI transmission container ID in an i-th section and a service transmission container ID in an i-th section to an i-th user group;
wherein i is greater than or equal to 1, and less than or equal to N.

10. The device according to claim 7, wherein the container allocation module (10) is configured to:

allocate $x_i$ OMCI transmission container IDs to an i-th user group; wherein the $x_i$ OMCI transmission container IDs are selected from all OMCI transmission container IDs supported by the OLT, a sum of numbers of OMCI transmission container IDs allocated to the N user groups does not exceed a total number of the OMCI transmission container IDs supported by the OLT, and OMCI transmission container IDs allocated to different user groups are different; and
allocate $y_i$ service transmission container IDs to the i-th user group; wherein the $y_i$ service transmission container IDs are selected from all service transmission container IDs supported by the OLT, a sum of numbers of service transmission container IDs allocated to the N user groups does not exceed a total number of the service transmission container IDs supported by the OLT, and service transmission container IDs allocated to different user groups are different;
wherein i is greater than or equal to 1, and less than or equal to N.

11. The device according to any one of claims 7-10, wherein the bandwidth allocation module (20) is configured to allocate the bandwidth resource corresponding to the bandwidth attribute to the user group corresponding to the virtual operator in the following manner:

for a user group, monitoring a sum of optical network unit, ONU, buffers of all online transmission containers of the user group, or monitoring a ratio of a sum of effective payloads to a sum of total payloads in uplink bursts of all online transmission containers of the user group; and
using a dynamic-bandwidth-allocation bandwidth prediction model to predict a total bandwidth of the user group according to the monitored data, and using the predicted bandwidth value as an upper limit of a total bandwidth allocated to all online users of the user group and corresponding to a bandwidth attribute of the user group in a next round of bandwidth allocation.

12. The device according to any one of claims 7-11, wherein the bandwidth attribute comprises at least one of a fixed bandwidth, a guaranteed bandwidth, or a best-effort bandwidth.

13. A computer-readable storage medium storing a program for realizing dynamic bandwidth allocation, wherein when the program for realizing dynamic bandwidth allocation is executed by a processor, the method for realizing dynamic bandwidth allocation according to any one of claims 1-6 is implemented.

**Patentansprüche**

1. Verfahren zur Realisierung einer dynamischen Bandbreitenzuweisung, umfassend:

   Zuweisen (S110) von Übertragungscontainern, die von einem optischen Leitungsendgerät, OLT, unterstützt werden, an N Benutzergruppen, wobei jeder von M virtuellen Betreibern einer Benutzergruppe entspricht, so dass die M virtuellen Betreiber M Benutzergruppen der N Benutzergruppen entsprechen und M kleiner oder gleich N ist;
   Einstellen (S120) eines Bandbreitenattributs einer Benutzergruppe, die einem virtuellen Betreiber unter den M virtuellen Betreibern entspricht, gemäß einer Bandbreitenanforderung des virtuellen Betreibers; und
   Zuweisen einer Bandbreitenressource, die dem Bandbreitenattribut entspricht, an die Benutzergruppe, die dem virtuellen Betreiber entspricht, über einen Übertragungscontainer, der der Benutzergruppe, die dem virtuellen Betreiber entspricht, zugewiesen ist,
   wobei das Verfahren ferner umfasst:
   Bestimmen der Anzahl N der Benutzergruppen entsprechend der Anzahl M der virtuellen Betreiber, wobei N eine kleinste positive ganze Zahl größer oder gleich M unter $2^n$ ist und n eine positive ganze Zahl ist.

2. Verfahren nach Anspruch 1, wobei das Zuweisen (S110) der von dem OLT unterstützten Übertragungscontainer zu den N Benutzergruppen umfasst:
   für eine Benutzergruppe Zuweisen eines OMCI-Übertragungscontainers (Optical Network Unit Management and Control Interface) und eines von der OLT unterstützten Dienstübertragungscontainers an die Benutzergruppe entsprechend einer Anzahl von Benutzern, die von einem der Benutzergruppe entsprechenden virtuellen Betreiber unterstützt werden.

3. Verfahren nach Anspruch 1, wobei das Zuweisen (S110) der von dem OLT unterstützten Übertragungscontainer zu den N Benutzergruppen umfasst:

   Unterteilen der von dem OLT unterstützten OMCI-Übertragungscontainer-IDs in N Abschnitte und Unterteilen der von dem OLT unterstützten Dienstübertragungscontainer-IDs in N Abschnitte; und
   Zuweisen einer OMCI-Übertragungscontainer-ID in einem i-ten Abschnitt und einer Dienstübertragungscontainer-ID in einem i-ten Abschnitt an eine i-te Benutzergruppe;
   wobei i größer als oder gleich 1 und kleiner als oder gleich N ist.

4. Verfahren nach Anspruch 1, wobei das Zuweisen (S110) der von dem OLT unterstützten Übertragungscontainer zu den N Benutzergruppen umfasst:

   Zuordnen von $x_i$ OMCI-Übertragungscontainer-IDs zu einer i-ten Benutzergruppe; wobei die $x_i$ OMCI-Übertragungscontainer-IDs aus allen OMCI-Übertragungscontainer-IDs ausgewählt werden, die von dem OLT unterstützt werden, eine Summe von Zahlen von OMCI-Übertragungscontainer-IDs, die den N Benutzergruppen zugeordnet sind, eine Gesamtzahl der OMCI-Übertragungscontainer-IDs, die von dem OLT unterstützt werden, nicht übersteigt und OMCI-Übertragungscontainer-IDs, die verschiedenen Benutzergruppen zugeordnet sind, unterschiedlich sind; und
   Zuweisen von $y_i$ Dienstübertragungscontainer-IDs an die i-te Benutzergruppe; wobei die $y_i$ Dienstübertragungscontainer-IDs aus allen Dienstübertragungscontainer-IDs ausgewählt werden, die von dem OLT unterstützt werden, eine Summe von Zahlen von Dienstübertragungscontainer-IDs, die den N Benutzergruppen zugewiesen werden, eine Gesamtzahl der Dienstübertragungscontainer-IDs, die von dem OLT unterstützt werden, nicht übersteigt, und Dienstübertragungscontainer-IDs, die verschiedenen Benutzergruppen zugewiesen werden, unterschiedlich sind;
   wobei i größer als oder gleich 1 und kleiner als oder gleich N ist.

5. Verfahren nach einem der Ansprüche 1-4, wobei das Zuweisen der Bandbreitenressource, das dem Bandbreitenattribut entspricht, zu der Benutzergruppe, die dem virtuellen Betreiber entspricht, umfasst:

   für eine Benutzergruppe die Überwachung einer Summe von Puffern der optischen Netzwerkeinheit (ONU) aller Online-Übertragungscontainer der Benutzergruppe oder die Überwachung eines Verhältnisses einer Summe von effektiven Nutzlasten zu einer Summe von Gesamtnutzlasten in Uplink-Bitbündel aller Online-Übertragungscontainer der Benutzergruppe; und
   Verwendung eines dynamischen Bandbreitenzuweisungs-Bandbreitenvorhersagemodells, um eine Gesamtbandbreite der Benutzergruppe gemäß den überwachten Daten vorherzusagen, und Verwendung des vorhergesagten Bandbreitenwerts als eine obere Grenze einer Gesamtbandbreite, die allen Online-Benutzern der Benutzergruppe zugewiesen wird und einem Bandbreitenattribut der Benutzergruppe in einer nächsten Runde der Bandbreitenzuweisung entspricht.

6. Verfahren nach einem der Ansprüche 1-5, wobei das Bandbreitenattribut mindestens eine feste Bandbreite, eine garantierte Bandbreite oder eine bestmögliche Bandbreite umfasst.

7. Vorrichtung zur Realisierung einer dynamischen Bandbreitenzuweisung, die Folgendes umfasst:

ein Containerzuweisungsmodul (10), das so konfiguriert ist, dass es Übertragungscontainer, die von einem optischen Leitungsendgerät, OLT, unterstützt werden, N Benutzergruppen zuweist, wobei jeder von M virtuellen Betreibern einer Benutzergruppe entspricht, so dass die M virtuellen Betreiber M Benutzergruppen der N Benutzergruppen entsprechen und M kleiner oder gleich N ist; und

ein Bandbreitenzuweisungsmodul (20), das so konfiguriert ist, dass es ein Bandbreitenattribut einer Benutzergruppe, die einem virtuellen Betreiber unter den M virtuellen Betreibern entspricht, gemäß einer Bandbreitenanforderung des virtuellen Betreibers einstellt; und eine Bandbreitenressource, die dem Bandbreitenattribut entspricht, der Benutzergruppe, die dem virtuellen Betreiber entspricht, über einen Übertragungscontainer, der der Benutzergruppe, die dem virtuellen Betreiber entspricht, zugewiesen ist, zuweist,

wobei das Containerzuweisungsmodul (10) ferner so konfiguriert ist, dass es die Anzahl N der Benutzergruppen entsprechend der Anzahl M der virtuellen Betreiber bestimmt, wobei N eine kleinste positive ganze Zahl größer oder gleich M unter $2^n$ ist und n eine positive ganze Zahl ist.

8. Vorrichtung nach Anspruch 7, wobei das Containerzuordnungsmodul (10) so konfiguriert ist, dass es:
für eine Benutzergruppe einen OMCI-Übertragungscontainer (Optical Network Unit Management and Control Interface) und einen von der OLT unterstützten Dienstübertragungscontainer der Benutzergruppe entsprechend der Anzahl der von einem der Benutzergruppe entsprechenden virtuellen Betreiber unterstützten Benutzer zuweisen.

9. Vorrichtung nach Anspruch 7, wobei das Containerzuordnungsmodul (10) so konfiguriert ist, dass es:

OMCI-Übertragungscontainer-IDs, die von dem OLT unterstützt werden, in N Abschnitte unterteilt und Dienstübertragungscontainer-IDs, die von dem OLT unterstützt werden, in N Abschnitte unterteilt; und
einer i-ten Benutzergruppe eine OMCI-Übertragungscontainer-ID in einem i-ten Abschnitt und eine Dienstübertragungscontainer-ID in einem i-ten Abschnitt zuweist;
wobei i größer als oder gleich 1 und kleiner als oder gleich N ist.

10. Vorrichtung nach Anspruch 7, wobei das Containerzuordnungsmodul (10) so konfiguriert ist, dass es:

$x_i$ OMCI-Übertragungscontainer-IDs einer i-ten Benutzergruppe zuweist; wobei die $x_i$ OMCI-Übertragungscontainer-IDs aus allen OMCI-Übertragungscontainer-IDs ausgewählt werden, die von dem OLT unterstützt werden, eine Summe von Zahlen von OMCI-Übertragungscontainer-IDs, die den N Benutzergruppen zugewiesen werden, eine Gesamtzahl der OMCI-Übertragungscontainer-IDs, die von dem OLT unterstützt werden, nicht überschreitet und OMCI-Übertragungscontainer-IDs, die verschiedenen Benutzergruppen zugewiesen werden, unterschiedlich sind; und

$y_i$ Dienstübertragungscontainer-IDs der i-ten Benutzergruppe zuweist; wobei die $y_i$ Dienstübertragungscontainer-IDs aus allen Dienstübertragungscontainer-IDs ausgewählt werden, die von dem OLT unterstützt werden, eine Summe der Anzahl von Dienstübertragungscontainer-IDs, die den N Benutzergruppen zugewiesen werden, eine Gesamtzahl der Dienstübertragungscontainer-IDs, die von dem OLT unterstützt werden, nicht überschreitet, und Dienstübertragungscontainer-IDs, die verschiedenen Benutzergruppen zugewiesen werden, unterschiedlich sind;
wobei i größer als oder gleich 1 und kleiner als oder gleich N ist.

11. Vorrichtung nach einem der Ansprüche 7-10, wobei das Bandbreitenzuweisungsmodul (20) so konfiguriert ist, dass es die Bandbreitenressource, die dem Bandbreitenattribut entspricht, der Benutzergruppe, die dem virtuellen Betreiber entspricht, auf die folgende Weise zuweist:

für eine Benutzergruppe die Überwachung einer Summe von Puffern der optischen Netzwerkeinheit (ONU) aller Online-Übertragungscontainer der Benutzergruppe oder die Überwachung eines Verhältnisses einer Summe von effektiven Nutzlasten zu einer Summe von Gesamtnutzlasten in Uplink-Bitbündel aller Online-Übertragungscontainer der Benutzergruppe; und

Verwendung eines dynamischen Bandbreitenzuweisungs-Bandbreitenvorhersagemodells, um eine Gesamtbandbreite der Benutzergruppe gemäß den überwachten Daten vorherzusagen, und Verwendung des vorhergesagten Bandbreitenwerts als Obergrenze einer Gesamtbandbreite, die allen Online-Benutzern der Benutzergruppe zugewiesen wird und einem Bandbreitenattribut der Benutzergruppe in einer nächsten Runde der Bandbreitenzuweisung entspricht.

**12.** Vorrichtung nach einem der Ansprüche 7-11, wobei das Bandbreitenattribut mindestens eine feste Bandbreite, eine garantierte Bandbreite oder eine bestmögliche Bandbreite umfasst.

**13.** Computerlesbares Speichermedium, das ein Programm zum Realisieren einer dynamischen Bandbreitenzuweisung speichert, wobei, wenn das Programm zum Realisieren einer dynamischen Bandbreitenzuweisung durch einen Prozessor ausgeführt wird, das Verfahren zum Realisieren einer dynamischen Bandbreitenzuweisung gemäß einem der Ansprüche 1-6 implementiert wird.

**Revendications**

**1.** Procédé permettant de réaliser une allocation dynamique de la bande passante, comprenant :

attribuer (S110) des conteneurs de transmission pris en charge par un terminal de ligne optique (OLT) à N groupes d'utilisateurs, chacun des M opérateurs virtuels correspondant à un groupe d'utilisateurs, de sorte que les M opérateurs virtuels correspondent à M groupes d'utilisateurs parmi les N groupes d'utilisateurs, et que M est inférieur ou égal à N ;
définir (S120) un attribut de largeur de bande d'un groupe d'utilisateurs correspondant à un opérateur virtuel parmi les M opérateurs virtuels, en fonction d'un besoin de largeur de bande de l'opérateur virtuel ; et
attribuer une ressource de largeur de bande correspondant à l'attribut de largeur de bande au groupe d'utilisateurs correspondant à l'opérateur virtuel par l'intermédiaire d'un conteneur de transmission attribué au groupe d'utilisateurs correspondant à l'opérateur virtuel,
le procédé comprend en outre :
déterminer le nombre N de groupes d'utilisateurs en fonction du nombre M d'opérateurs virtuels, N étant le plus petit nombre entier positif supérieur ou égal à M parmi $2^n$, et n étant un nombre entier positif.

**2.** Procédé selon la revendication 1, dans lequel attribuer (S110) des conteneurs de transmission pris en charge par l'OLT aux N groupes d'utilisateurs, comprend :
pour un groupe d'utilisateurs, attribuer au groupe d'utilisateurs un conteneur de transmission de l'interface de gestion et de contrôle de l'unité de réseau optique (OMCI) et un conteneur de transmission de service pris en charge par l'OLT, en fonction du nombre d'utilisateurs pris en charge par un opérateur virtuel correspondant au groupe d'utilisateurs.

**3.** Procédé selon la revendication 1, dans lequel l'attribution (S110) des conteneurs de transmission pris en charge par l'OLT aux N groupes d'utilisateurs, comprend :

diviser les ID de conteneurs de transmission OMCI pris en charge par l'OLT en N sections, et diviser les ID de conteneurs de transmission de services pris en charge par l'OLT en N sections ; et
attribuer un groupe d'utilisateurs d'un ID de conteneur de transmission OMCI dans une i-ième section et d'un ID de conteneur de transmission de service dans une i-ième section ;
où i est supérieur ou égal à 1 et inférieur ou égal à N.

**4.** Procédé selon la revendication 1, dans lequel l'attribution (S110) des conteneurs de transmission pris en charge par l'OLT aux N groupes d'utilisateurs, comprend :

attribuer $x_i$ ID de conteneurs de transmission OMCI à un i-ième groupe d'utilisateurs ; les $x_i$ ID de conteneurs de transmission OMCI sont sélectionnés parmi tous les ID de conteneurs de transmission OMCI pris en charge par l'OLT, la somme des nombres d'ID de conteneurs de transmission OMCI attribués aux N groupes d'utilisateurs ne dépasse pas le nombre total d'ID de conteneurs de transmission OMCI pris en charge par l'OLT, et les ID de conteneurs de transmission OMCI attribués à des groupes d'utilisateurs différents sont différents ; et

attribuer $y_i$ ID de conteneurs de transmission de services au i-ème groupe d'utilisateurs ; les $y_i$ ID de conteneurs de transmission de services sont sélectionnés parmi tous les ID de conteneurs de transmission de services pris en charge par l'OLT, la somme des nombres d'ID de conteneurs de transmission de services attribués aux N groupes d'utilisateurs ne dépasse pas le nombre total d'ID de conteneurs de transmission de services pris en charge par l'OLT, et les ID de conteneurs de transmission de services attribués à différents groupes d'utilisateurs sont différents ;

où i est supérieur ou égal à 1 et inférieur ou égal à N.

5. Procédé selon l'une quelconque des revendications 1 à 4, dans lequel attribuer la ressource de bande passante correspondant à l'attribut de bande passante au groupe d'utilisateurs correspondant à l'opérateur virtuel, comprend :

pour un groupe d'utilisateurs, surveiller la somme des tampons des unités de réseau optique (ONU) de tous les conteneurs de transmission en ligne du groupe d'utilisateurs, ou surveiller le rapport entre la somme des charges utiles effectives et la somme des charges utiles totales dans les salves de liaison montante de tous les conteneurs de transmission en ligne du groupe d'utilisateurs ; et

utiliser un modèle de prédiction de la bande passante pour l'allocation dynamique de la bande passante afin de prédire la bande passante totale du groupe d'utilisateurs en fonction des données contrôlées, et utiliser la valeur prédite de la bande passante comme limite supérieure de la bande passante totale allouée à tous les utilisateurs en ligne du groupe d'utilisateurs et correspondant à un attribut de bande passante du groupe d'utilisateurs lors d'un prochain cycle d'allocation de la bande passante.

6. Procédé selon l'une des revendications 1 à 5, dans lequel l'attribut de bande passante comprend au moins l'un des éléments suivants : une bande passante fixe, une bande passante garantie ou une bande passante best-effort.

7. Dispositif permettant de réaliser une allocation dynamique de la bande passante, comprenant :

un module d'attribution de conteneurs (10) configuré pour attribuer des conteneurs de transmission pris en charge par un terminal de ligne optique (OLT) à N groupes d'utilisateurs, chacun des M opérateurs virtuels correspondant à un groupe d'utilisateurs, de sorte que les M opérateurs virtuels correspondent à M groupes d'utilisateurs parmi les N groupes d'utilisateurs, et que M est inférieur ou égal à N ; et

un module d'allocation de bande passante (20) configuré pour définir un attribut de bande passante d'un groupe d'utilisateurs correspondant à un opérateur virtuel parmi les M opérateurs virtuels, en fonction d'un besoin de bande passante de l'opérateur virtuel ; et allouer une ressource de bande passante correspondant à l'attribut de bande passante au groupe d'utilisateurs correspondant à l'opérateur virtuel par l'intermédiaire d'un conteneur de transmission alloué au groupe d'utilisateurs correspondant à l'opérateur virtuel,

le module d'attribution des conteneurs (10) est en outre configuré pour déterminer d le nombre N de groupes d'utilisateurs en fonction du nombre M d'opérateurs virtuels, N étant le plus petit nombre entier positif supérieur ou égal à M parmi $2^n$, et n étant un nombre entier positif.

8. Dispositif selon la revendication 7, dans lequel le module (10) d'attribution des contenants est configuré pour :
pour un groupe d'utilisateurs, attribuer au groupe d'utilisateurs un conteneur de transmission d'interface de gestion et de contrôle d'unité de réseau optique (OMCI) et un conteneur de transmission de service pris en charge par l'OLT, en fonction du nombre d'utilisateurs pris en charge par un opérateur virtuel correspondant au groupe d'utilisateurs.

9. Dispositif selon la revendication 7, dans lequel le module (10) d'attribution des contenants est configuré pour :

diviser les ID de conteneurs de transmission OMCI pris en charge par l'OLT en N sections, et diviser les ID de conteneurs de transmission de services pris en charge par l'OLT en N sections ; et

attribuer un ID de conteneur de transmission OMCI dans une i-ième section et un ID de conteneur de transmission de service dans une i-ième section à un i-ième groupe d'utilisateurs ;

où i est supérieur ou égal à 1 et inférieur ou égal à N.

10. Dispositif selon la revendication 7, dans lequel le module d'attribution des contenants (10) est configuré pour :

attribuer $x_i$ ID de conteneurs de transmission OMCI à un i-ème groupe d'utilisateurs ; les $x_i$ ID de conteneurs de transmission OMCI sont sélectionnés parmi tous les ID de conteneurs de transmission OMCI pris en charge par l'OLT, la somme des nombres d'ID de conteneurs de transmission OMCI attribués aux N groupes d'utilisateurs ne dépasse pas le nombre total d'ID de conteneurs de transmission OMCI pris en charge par l'OLT, et les ID de conteneurs de transmission OMCI attribués à des groupes d'utilisateurs différents sont différents ; et attribuer $y_i$ ID de conteneurs de transmission de services au i-ème groupe d'utilisateurs ; les $y_i$ ID de conteneurs de transmission de services sont sélectionnés parmi tous les ID de conteneurs de transmission de services pris en charge par l'OLT, la somme des nombres d'ID de conteneurs de transmission de services attribués aux N groupes d'utilisateurs ne dépasse pas le nombre total d'ID de conteneurs de transmission de services pris en charge par l'OLT, et les ID de conteneurs de transmission de services attribués à différents groupes d'utilisateurs sont différents ;

où i est supérieur ou égal à 1 et inférieur ou égal à N.

11. Dispositif selon l'une quelconque des revendications 7 à 10, dans lequel le module d'allocation de bande passante (20) est configuré pour allouer la ressource de bande passante correspondant à l'attribut de bande passante au groupe d'utilisateurs correspondant à l'opérateur virtuel de la manière suivante :

pour un groupe d'utilisateurs, surveiller la somme des tampons des unités de réseau optique (ONU) de tous les conteneurs de transmission en ligne du groupe d'utilisateurs, ou surveiller le rapport entre la somme des charges utiles effectives et la somme des charges utiles totales dans les salves de liaison montante de tous les conteneurs de transmission en ligne du groupe d'utilisateurs ; et

utiliser un modèle de prédiction de la bande passante pour l'allocation dynamique de la bande passante afin de prédire la bande passante totale du groupe d'utilisateurs en fonction des données contrôlées, et utiliser la valeur prédite de la bande passante comme limite supérieure de la bande passante totale allouée à tous les utilisateurs en ligne du groupe d'utilisateurs et correspondant à un attribut de bande passante du groupe d'utilisateurs lors d'un prochain cycle d'allocation de la bande passante.

12. Dispositif selon l'une des revendications 7 à 11, dans lequel l'attribut de bande passante comprend au moins l'un des éléments suivants : une bande passante fixe, une bande passante garantie ou une bande passante best-effort.

13. Support de stockage lisible par ordinateur stockant un programme pour la réalisation de l'allocation dynamique de la bande passante, dans lequel, lorsque le programme pour la réalisation de l'allocation dynamique de la bande passante est exécuté par un processeur, le procédé pour la réalisation de l'allocation dynamique de la bande passante selon l'une quelconque des revendications 1 à 6 est mis en oeuvre.

allocating T-CONTs supported by an OLT to N user groups, each of M virtual operators corresponding to one user group, and M being less than or equal to N

$\curvearrowright$ S110

setting a bandwidth attribute of a user group corresponding to a virtual operator among the M virtual operators, according to a bandwidth requirement of the virtual operator; and allocating a bandwidth resource corresponding to the bandwidth attribute to the user group corresponding to the virtual operator through a T-CONT allocated to the user group corresponding to the virtual operator

$\curvearrowright$ S120

Fig. 1

Container allocation module $\curvearrowright$ 10

Bandwidth allocation module $\curvearrowright$ 20

Fig. 2

OLT
（Basic operator）

User group
（Virtual operator）

User group
（Virtual operator）

ONU

ONU

ONU

ONU

ONU

ONU

T-CONT ID

T-CONT ID

T-CONT ID

T-CONT ID

T-CONT ID

T-CONT ID

T-CONT ID

T-CONT ID

T-CONT ID

T-CONT ID

T-CONT ID

T-CONT ID

T-CONT ID

Fig. 3

**EP 3 896 928 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 201811518707
- US 2008205443 A1
- US 2009103545 A1